# EUROPEAN PATENT APPLICATION

(11) **EP 4 531 305 A1**
(43) Date of publication of application: **02.04.2025**
(21) Application number: 24202002.2
(22) Date of filing: 23.09.2024
(51) Int. Cl.: H04B 10/11, H04B 10/524, H04L 7/00, H04B 14/02

(54) **TIMING RECOVERY FOR SPARSELY RECOVERED TIMING SIGNALS**

(30) Priority: 28.09.2023 US 202363586203 P
(71) Applicant: Nokia Solutions and Networks Oy, 02610 Espoo (FI)
(72) Inventor: ESSIAMBRE, Rene - Jean, Berkeley Heights, 07922 (US); GUO, Cheng, Arlington, 76013 (US)
(74) Representative: Nokia EPO representatives

(57) **Abstract**

An apparatus includes an optical data receiver and a digital signal processor. The optical data receiver includes an electro-optical front end to output a time series of measurements of a pulse-modulated optical signal received by the optical data receiver. The digital signal processor has circuits to identify a sequence of optical pulses carried by the optical signal from the time series of measurements. The digital signal processor is configured to identify times of optical clock pulses carried by the optical signal from the sequence of identified times of optical pulses by temporally filtering the sequence with a plurality temporal comb filters of different pass band spacings.

## Description

### CROSS-REFFERENCE TO RELATED APPLICATIONS

This application claims the benefit of U.S. Provisional Patent Application Serial No. 63/586,203, incorporated herein by reference, filed in the U.S. Patent and Trademark Office on September 28, 2023.

### TECHNICAL FIELD

Various example embodiments relate to the field of optical communications and, more specifically, to recovery of timing information for optical communications.

### BACKGROUND

In some communication systems, a transmitter transmits separate clock signals, which are subsequently used by a receiver for timing synchronization so that received data is properly identified by the receiver. Typically, such systems rely on the transmitted clock signals that are high quality when received at the receiver, but in some situations, the communication channel causes a large loss so that only a few clock signals are recoverable at the receiver. If such channel-related loss is large, the clock signals may be irregularly or rarely recovered at the receiver thereby making clock recovery for timing synchronization challenging. Additionally, if clock signals are only randomly recovered, a receiver may have difficulty distinguishing the clock signals from random noise in the channel.

One way to avoid irregular effective deletions of clock signals is to use an empty timeslot instead of a clock pulse as the clock signal, e.g., by using Pulse-Position Modulation (PPM) where empty time guard bands are periodically inserted into the communication stream. Statistical averaging may then be applied to recover the timing of such empty guard bands and thereby achieve clock recovery or timing synchronization at the receiver.

Another way to provide clock signals involves inserting pilot symbols (pulses) into a data transmission pattern and performing averaging over received data and clock pulses to recover timing synchronization information.

In an optical communication system, Photon Information Efficiency (PIE) determines the maximum channel path loss and minimum signal power supported for point-to-point communications. PIE is a measure of information that can be recovered per unit of optical signal power incident on a receiver. PIE is generally expressed in Bits per Incident Photon (BIP). One application of high-PIE communication is space exploration. One benefit of free-space optical over microwave communications is a ~76-dB lower path diffraction loss due to nearly four orders of magnitude higher frequencies of optical waves (~200 THz) relative to microwaves (~30 GHz). Optical communications also offer considerably larger available and unregulated frequency bandwidth.

In 2015, a space optical communication project was able to demonstrate 22 (38) Mb/s with PIE of 0.28 (0.67) BIP over an Earth-Moon distance. Future, optical communications reaching much farther are planned which aim to optically communicate at 114 kbits/s with a PIE of 1 BIP at twice the maximum Earth-Mars distance. On Earth, the PIE achieved using an optical pre-amplifier and coherent receiver seems to have been demonstrated to be as high as 0.48 BIP with phase-insensitive amplification and 1.25 BIP with phase-sensitive amplification. Without optical pre-amplifiers, a PIE of 0.67 BIP with a coherent receiver has been achieved.

It is predicted that photon counters could offer higher PIE than coherent detection. Experiments performed using Geiger-mode avalanche photodiodes, Superconducting Nanowire Single-Photon Detectors (SNSPDs), and Pulse-Position Modulation (PPM) have demonstrated PIE as high as 13.5 BIP at a rate of 6.4 kbits/s. However, the same electrical clock was shared between the transmitter and receiver, sidestepping the issue of independent clock synchronization which can be challenging at high PIE and low received powers.

### SUMMARY OF SOME ILLUSTRATIVE EMBODIMENTS

This section introduces aspects that may help facilitate a better understanding of the disclosure. Accordingly, the statements of this section are to be read in this light and are not to be understood as admissions about what is in the prior art or what is not in the prior art.

First embodiments provide an apparatus that includes an optical data receiver and a digital signal processor. The optical data receiver includes an electro-optical front-end to output a time series of electrical or digital measurements of a pulse-modulated optical signal received by the optical data receiver. The digital signal processor has circuits to identify a sequence of times of optical pulses carried by the optical signal from the time series of electrical or digital measurements. The digital signal processor is configured to identify times of optical clock pulses carried by the optical signal from the sequence of identified times of optical pulses by temporally filtering the sequence with a plurality temporal comb filters of different pass band spacings.

In the first embodiment, the digital signal processor may be configured to, for each one of the temporal comb filters, identify some of the times of optical pulses of the time series as potential optical clock pulse times in response to the some of the times of optical pulses of the time series being determined to be in band passes of the one of the temporal comb filters. The digital signal processor may be further configured to indicate one of the band pass spacings as being a period between transmissions of optical clock pulses in the optical signal in response to determining that more of the identified times of the optical pulses are potential optical clock pulse times for the corresponding one of the temporal comb filters than for others of the temporal comb filters. In such an embodiment, the digital signal processor may also be configured to refine the set of optical pulse times in band passes of the one of the temporal comb filters to remove optical pulse times that are outliers with respect to the set of temporal band passes of the one of the temporal comb filters. The digital signal processor may be further configured to further filter the refined set of optical pulse times with a set of temporal comb filters of different band pass spacing to find another estimate of the period between transmissions of optical clock pulses in the optical signal. In some embodiments of this paragraph, the digital processor may be configured to use the period to extract a data sequence carried by optical signal from the measurements.

In various ones of the above first embodiments, the optical signal may be pulse position modulated, on/Off keying modulated, or differential phase shift keying modulated.

In various ones of the above first embodiments, the optical data receiver may be configured for receiving the optical signal from a remote optical transmitter via a free-space optical link.

Second embodiments provide a method. The method includes, at an optical data receiver, outputting a time series of electrical or digital measurements of a received pulse-modulated optical signal received by the optical data receiver and identifying a sequence of times for optical pulses carried by the optical signal from the time series of electrical or digital measurements. The method also includes identifying times of clock pulses carried by the optical signal from the sequence of identified times of optical pulses by temporally filtering the sequence with a plurality temporal comb filters of different pass band spacings.

In some of the second embodiments, the method may further include, for each one of the temporal comb filters, identifying some of the times of optical pulses of the time series as times of potential optical clock pulse in response to the some of the times of optical pulses of the time series being in band passes of the one of the temporal comb filters. In some such embodiments, the method may further include indicating one of the band pass spacings as being a period between transmissions of optical clock pulses in the optical signal in response to determining that more of the identified times of the optical pulses are potential optical clock pulse times for the corresponding one of the temporal comb filters than for others of the temporal comb filters. In some such embodiments, the method may further include refining the set of optical pulse times in band passes of the one of the temporal comb filters to remove optical pulse times that are outliers with respect to the set of temporal band passes of the one of the temporal comb filters.

Said method may further include filtering the refined set of optical pulse times with another set of temporal comb filters of different band pass spacing to find another estimate of the period between transmissions of optical clock pulses in the optical signal. In some embodiments of this paragraph, the method may further include, based on the determined period, extracting a data sequence carried by the optical signal from the measurements.

In various ones of the above second embodiments, the optical signal may be pulse position modulated, on/Off keying modulated, or differential phase shift keying modulated.

In various ones of the above second embodiments, the method may further include receiving the optical signal from a remote optical transmitter via a free-space optical link.

Third embodiments provide an apparatus that includes means for receiving a pulse-modulated optical signal carrying optical pulses including clock pulses at an optical data receiver, means for outputting a time series of measurements of the received pulse-modulated optical signal by the optical data receiver, means for identifying a sequence of carried optical pulse times from the time series of measurements, and means for identifying clock pulse times from the identified sequence of carried optical pulse times by temporally filtering the identified sequence of carried optical pulse times with a plurality of temporal comb filters of different pass band spacings.

Third embodiments may further comprise means for identifying potential clock pulse times from the identified sequence of carried optical pulse times for each one of the plurality of temporal comb filters by determining which of the potential clock pulse times in the sequence of carried optical pulse times are in a pass band of each one of the plurality of temporal comb filters. In some such embodiments, the apparatus may further comprise means for identifying one temporal comb filter of the plurality of temporal comb filters having more potential clock pulse times than others off the temporal comb filters and estimating a data symbol-clock-pulse frame length of the received pulse-modulated optical signal as corresponding to the pass band spacing of the identified one temporal comb filter. Some third embodiments may also comprise means for refining the potential clock pulse times by identifying and removing outlier potential clock pulse times from the identified one temporal comb filter. Third embodiments may further include means for further filtering the refined potential clock pulse times with a set of temporal comb filters of different pass band spacing to refine the estimated data symbol-clock-pulse frame length of the received pulse-modulated optical signal. The received pulse-modulated optical signal may further carry a data sequence and some third embodiments may further comprise means for using the estimated data symbol-clock-pulse frame length to extract the data sequence from the time series of measurements. Furthermore, the received pulse-modulated optical signal may be pulse position modulated to carry data and the pulse-modulated optical signal may be received from a remote optical transmitter via a free-space optical link.

One or more of the above embodiments may be combined as desired.

The above summary provides a basic understanding of some aspects of the disclosure. This summary is not an extensive overview of the disclosure. It is intended to neither identify key or critical elements of the disclosure nor delineate any scope of the example embodiments described herein, or any scope of the claims. Its sole purpose is to present some concepts of the disclosure in a simplified form as a prelude to the more detailed description that is presented later.

### DESCRIPTION OF THE DRAWINGS

Other aspects, features, and benefits of various disclosed embodiments will become more fully apparent, by way of example, from the following detailed description and the accompanying drawings. Some embodiments are now described, by way of example only, and with reference to the accompanying drawings. Similar reference numbers represent similar elements or the same type of element on all drawings.
FIG. 1 is a block diagram schematically illustrating a point-to-point optical transmission system;
FIG. 2 illustrates a data symbol-clock frame of a transmitted data stream useable by some embodiments of the optical transmission system of Figure 1;
FIG. 3 is a flow diagram schematically illustrating a method for performing clock recovery at an optical data receiver according to various example embodiments; and
FIG. 4 is a flow diagram schematically illustrating a method of performing data retrieval from a pulse-position modulated (PPM) optical signal with clock recovery according to various example embodiments.

### DETAILED DESCRIPTION OF SOME ILLUSTRATIVE EMBODIMENTS

The figures and the following description illustrate specific exemplary embodiments. It will thus be appreciated that those skilled in the art will be able to devise various arrangements that, although not explicitly described or shown herein, embody the principles described herein and are included within the scope of the claims. The inventive concepts are not limited to the specific embodiments or examples described below but are defined by the claims and their equivalents.

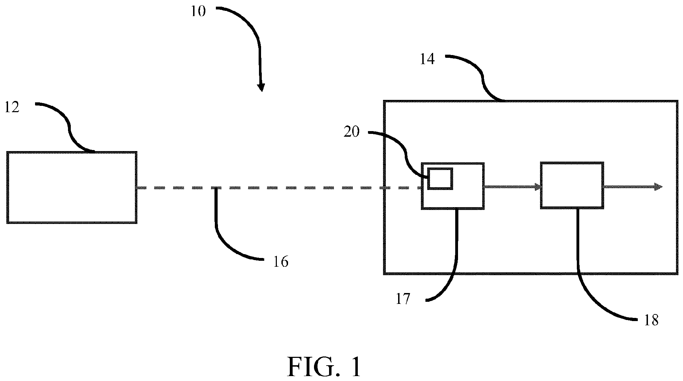

Example embodiments described herein address the issue of timing recovery for sparsely recovered timing signals. Figure 1 schematically illustrates a point-to-point, optical communication system 10. The communication system 10 includes an optical data transmitter 12, an optical data receiver 14, and an optical link 16 connecting the optical data transmitter 12 to the optical data receiver 14. In various embodiments, the optical link 16 may be a free space, optical link, such as through the atmosphere and/or partially in outer space. Such free space, optical links can cause a high optical attenuation. The optical data transmitter 12 may transmit data as optical data symbols in various modulation formats, e.g., a pulse position modulation (PPM) format, an On/Off Keyed (OOK) format modulation, and/or a differential phase-shift keyed (DPSK) format to name a few.

The optical data receiver 14 further comprises an optical front-end 17 for receiving the optical signal and a digital signal processor (DSP) 18. The optical front-end 17 includes an optical detector 20, for outputting a sequence of electrical measurements, e.g., digital measurements, of the received optical signal. For example, the optical detector 20 may include a conventional photodiode, tunnel diode, or quantum photon detector connected to an analog-to-digital converter with or without an intermediate amplifier. The digital signal processor 18 retrieves clock/timing information from the measurements output by the optical detector 20 and retrieves part or all of the data modulated onto the received optical signal from the measurements output of the optical detector 20.

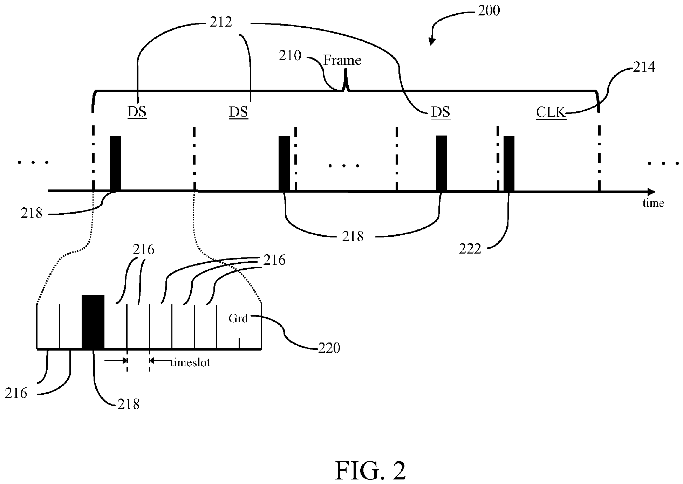

Figure 2 schematically illustrates a segment of an optical signal stream 200, as transmitted by an optical data transmitter, such as optical data transmitter 12 in FIG. 1, employing optical PPM modulation. The optical signal stream 200 comprises a series of data symbol-clock frames 210. Each data symbol-clock frame 210 includes N data symbols (DSs) 212 and a clock sequence (CLK) 214. Each data symbol DS 212 has a sequence of timeslots (TS) 216, wherein each TS 216 has the same length. Each data symbol DS 212 includes an optical pulse (OP) 218 in only one of the timeslots 216 thereof, wherein the position of the optical pulse (OP) 218 encodes a symbol value via pulse-position modulation (PPM) of data. Since the location of the optical pulse (OP) 218 in a data symbol (DS) 212 defines the data value, the location of the optical pulse (OP) 218 varies with the particular data symbol (DS) 212 in the frame 210. In contrast, the clock sequence (CLK) 214 has the same form in each frame 210 and is located at the same location in each frame 210. In the illustrated embodiment, the clock sequence (CLK 214 has a single clock pulse (CP) 222, but in other embodiments (not shown), the clock sequence (CLK) 214 may include multiple clock pulses (CP) 222. In this example embodiment, the single clock pulse (CP) 222 is located at the beginning of the clock sequence (CLK) 214, but other embodiments may use different forms and/or locations for the clock pulse(s) (CP) 222. In various embodiments, the data symbols (DS) 212 and/or clock sequence (CLK) 214 may end with an empty guard band (Grd) 220 of fixed length.

Pulse-position modulation (PPM) is a signal modulation technique in which M message bits are encoded by a single data symbol. The location of the pulse in the timeslot of the data symbol determines the value carried by the data symbol. In order to encode M bits per data symbol, the PPM data symbol has 2^{M} timeslots of which only one of the time slots has a pulse therein, i.e., the other timeslots are empty. For PPM, the transmission bit rate is M/T where "T" is the temporal length of the PPM data symbol. Since pulse position determines the value of a PPM data symbol, decoding of data, which was transmitted in the PPM format, requires accurate knowledge of the location of the optical pulses in individual PPM data symbols, e.g., knowledge of the timeslot length, the PPM data symbol length, and/or the length of a single data symbol-clock frame. Unfortunately, transmission conditions may change so that the timeslot length varies at a remote transmitter operating according to PPM data modulation.

In an optical data transmitter performing PPM optical data transmission, the length of the individual timeslots of a PPM data symbol may slowly vary over time due to slow fluctuations, such as environmental conditions, heating, cooling, and/or power fluctuations at the optical data transmitter. Herein, various embodiments provide methods and apparatus for determining the PPM timeslot length and/or the temporal length "T" of the PPM data symbol, at the optical data transmitter. Such information is typically used to reliably decode the sequence of received data symbol-clock frames, at an optical data receiver. In particular, the optical data receiver can use the received signal sequence, i.e., clock sequences therein, to adjust the decoding of the received optical signal, according to the estimated data symbol-clock frame rate or some indicator thereof. Such a rate adjustment can compensate for slow variations in the transmission rate at the remote optical data transmitter, i.e., typically without a need for 2-way communication between the transmitter and receiver.

Various embodiments, some of which are described herein, can maintain synchronization, i.e., clock recovery, in the presence of slow variations in the length of transmitted timeslots TS that are much slower than the frame rate. Such embodiments provide for clock recovery even when the optical channel effectively erases many of the transmitted clock pulses, e.g., due to strong optical attenuation. As examples, free space optical paths, e.g., through the earth's atmosphere and/or through outer space, may cause a high erasure rate of the clock sequences due to high attenuation of the optical pulses by the optical channel. Herein, the various embodiments use the periodicity of the transmission of clock sequences in the received optical signal to identify recovered optical pulses as clock pulses rather than as optical pulses of data symbols. Herein, the recovery of an optical pulse typically implies an identification of the temporal segment of the received optical signal as having a large enough intensity to be distinguished from noise. Typically, the clock pulses are transmitted periodically in the optical signal, during a time over which the length of the timeslots, at the optical transmitter, does not change significantly. In contrast, the optical pulses of PPM data symbols are not typically periodically distributed in the transmitted optical signal. Thus, one would expect the optical pulses of PPM data symbols to typically be approximately randomly located in the transmitted optical signal, i.e., seeming rather random except during the transmission of exceptional regular or periodic data segments. In various embodiments, even though the recovered sequence of clock pulses may superficially seem to be almost random, i.e., due to a high effective erasure rate, the clock pulses should be identifiable, at the optical data receiver, because the clock pulses were transmitted on a regular temporal grid, and the clock pulses, which are recovered at the optical data receiver, will still be on that temporal grid.

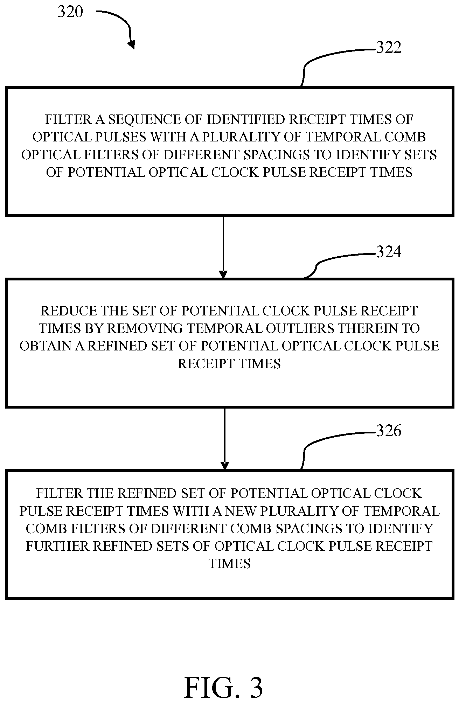

Figure 3 is a flow chart schematically illustrating an exemplary timing recovery method 320 for performing clock recovery using a digital signal processor (DSP) in an optical data receiver, e.g., the DSP 18 of the optical data receiver 14 of Figure 1. In the illustrated embodiment, the optical data transmitter transmits data symbol-clock frames such as those shown in Figure 2, with each data-symbol-clock frame including a single clock pulse therein. The optical front-end of the optical data receiver produces electrical measurements (e.g., digitalized measurements) of the received optical signal, and the DSP uses those measurements to identify a sequence of pulse receipt times for individual optical pulses in the received optical signal, i.e. times at which light intensities indicate arrival or receipt of an optical pulse, even in the presence of attenuation and noise.

The timing recovery method 320 includes filtering the sequence of receipt times of the optical pulses identified by the DSP from the optical front-end electrical measurements which are indicative of the received optical signal. This filtering is done by using a plurality of temporal comb filters of different comb spacings to identify sets of potential clock pulse receipt times (initial temporal filtering step 322) from the sequence of pulse receipt times identified by the DSP. Each comb filter has a set of regularly spaced temporal pass bands of corresponding spacing. The initial temporal filtering step 322 includes determining which one of the comb filters (the reference comb filter) has band passes that coincide with the largest number of pulse receipt times and identifying those pulse receipt times as being the receipt times of potential clock pulses. For embodiments that include only one clock pulse per data symbol-clock-pulse frame, the spacing of the band passes of the reference comb filter can also be used as an estimate of the transmitted data-symbol-clock frame length. In various embodiments, different ones of the comb filters typically have band pass filter spacings distributed near an expected data symbol-clock pulse frame length T for the optical signal transmitted by the remote optical data transmitter.

The initial temporal filtering step 322 may involve performing filtering with each one of the comb filters in the plurality of temporal comb filters in an iterative fashion, especially when the optical data receiver cannot initially distinguish the clock pulses from the optical pulses of the PPM data symbols in the received optical signal. For example, filtering may include applying the particular comb filter to the sequence of pulse receipt times with different relative time shifts such that different applications align different ones of the pulse receipt times in the first bandpass of the particular temporal comb filter. Various embodiments of initial temporal filtering step 322 identify the application that produces the largest number of optical pulse receipt times in the band passes of the particular comb filter as the proper application of the comb filter. For such a proper application, the optical pulse receipt times in the band passes of the particular comb filter correspond to the potential clock pulse receipt times. In particular, other applications of the same temporal comb filter, which result in smaller numbers of optical pulse receipt times in the band passes of that same comb filter, are likely applications where the optical pulse receipt time in the first band pass is an optical pulse receipt time of a PPM data symbol rather than that of a clock pulse, because the optical pulse of PPM data symbols are not expected to be periodically distributed in the transmitted signal stream. Thus, the number of overlaps between the pass bands of the proper comb filter and such optical data symbol pulse receipt times should be smaller than that for clock pulse receipt times.

In some situations, the initial temporal filtering step 322 may identify some potential clock pulse receipt times, some of the identified optical pulse receipt times may, in fact, be optical pulse receipt times of the PPM data symbols. That is, some optical pulses of PPM data symbols may be close to the clock pulses and thus, may have receipt times falling within the band passes of the proper temporal comb filter. Thus, some of those optical pulses may be falsely identified as clock pulse receipt times at the initial temporal filter step 322.

Thus, the timing recovery method 320 may further include optional step(s) to further refine the set of potential clock pulse receipt times by removing some of such optical pulse receipt times therein, which were falsely identified, at the initial temporal filtering step 322, as clock pulse receipt times. Such further refinement may improve the identification of the transmission rate of frames by the optical data receiver.

Thus, the timing recovery method 320 may optionally include reducing the set of potential clock pulse receipt times determined at the initial temporal filtering step 322, by removing temporal outliers therein to obtain a reduced and refined set of potential clock pulse receipt times (outlier removal step 324). In particular, since the optical pulses of PPM optical symbols are off the periodic temporal grid of the transmitted clock pulses, the optical pulses of PPM optical symbols are expected to be statistical outliers in the set identified by performance of the initial temporal filtering step 322. For example, the outliers may be identified as optical pulse receipt times of the set identified by the initial temporal filtering step 322, which are off the temporal grid of the comb filter by, at least, X standard deviations, e.g., X may be chosen to be greater than 3, 4, etc. in various embodiments.

Thus, the timing recovery method 320 may also include filtering the reduced and refined set of potential clock pulse receipt times, with a plurality of new temporal comb filters of different comb spacings to identify further refined sets of clock pulse receipt times (additional temporal filtering step 326). The additional temporal filtering step 326 may include identifying one of the new comb filters whose band passes coincide with the largest number of identified optical pulse receipt times and identifying the set of those optical pulse receipt times as the set of actual clock pulse receipt times. The spacing of the optical band passes of the new comb filters often provides a better estimate of the frame length transmitted at the remote optical transmitter, i.e., if a large enough number of potential clock pulse receipt times are still identified as clock pulse receipt times by the performance of the additional temporal filtering step 326.

In various embodiments, the outlier removal step 324 and the additional temporal filtering step 326 may be repeated on the refined set of clock pulse receipt times to find an even better refined set of potential clock pulse receipt times, i.e., by eliminating more outlier optical pulse receipt times from the refined set. Then, new temporal comb filters may be applied to the better refined set to identify a best new temporal optical comb filter, i.e., the new comb filters having the most optical pulse receipt times located in its band passes, wherein the best new optical comb filter has a band pass spacing that is likely to be an even better estimate of the actual data symbol-clock frame rate at the remote optical data transmitter.

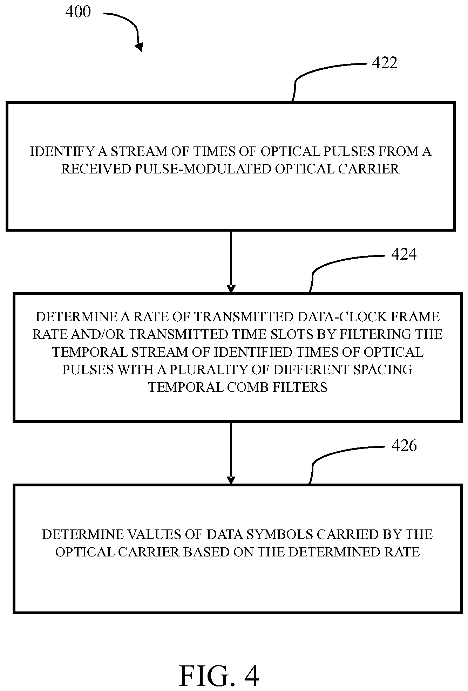

Figure 4 illustrates a data recovery method 400 for recovering data from a PPM, OOF, or DPSK modulated optical signal by an optical data receiver employing the timing recovery method 320 of Figure 3 for timing recovery, e.g., in the optical communication system 10 of Figure 1. The data recovery method 400 includes recovering a temporal stream of optical pulse arrival or receipt times in the received optical signal, e.g., a pulse-modulated optical carrier, i.e., for receipt at the optical data receiver (stream identification step 422). The recovering includes distinguishing the receipt of actual optical pulses from background noise. The data recovery method 400 includes determining a rate representative of a transmitted data symbol-clock frame rate and/or a timeslot rate by filtering the temporal stream of arrival or receipt times of the distinguished optical pulses with a plurality of temporal comb filters of different band pass spacing (rate determination step 424). For example, the rate may be determined by the clock recovery method 320 of Figure 3. The data recovery method 400 can include identifying, from the recovered temporal stream of optical pulse arrival or receipt times, the values of data symbols carried by the temporal stream (data symbol identification step 426), wherein identifying of the values of data symbols is based on the rate determined at the rate determination step 424.

In various embodiments herein, the band pass filters of the set of temporal comb filters may be chosen to have various widths, e.g., to better account for optical pulse jitter, detection time errors, and/or to increase or decrease the number of optical pulses in the band passes of some of the temporal optical comb filters. Furthermore, in various embodiments, the data-modulated optical signal may have optical data symbols carrying data in various modulation formats, e.g., the PPM, OOK, and DPSK modulation formats.

While this disclosure includes references to illustrative embodiments, this specification is not intended to be construed in a limiting sense. Various modifications of the described embodiments, as well as other embodiments within the scope of the disclosure, which are apparent to persons skilled in the art to which the disclosure pertains are deemed to lie within the principle and scope of the disclosure, e.g., as expressed in the following claims.

Unless explicitly stated otherwise, each numerical value and range should be interpreted as being approximate as if the word "about" or "approximately" preceded the value or range.

It will be further understood that various changes in the details, materials, and arrangements of the parts which have been described and illustrated to explain the nature of this disclosure may be made by those skilled in the art without departing from the scope of the disclosure, e.g., as expressed in the following claims.

The use of figure numbers and/or figure reference labels in the description is intended to identify one or more possible embodiments of the claimed subject matter to facilitate the interpretation of the claims. Such use is not to be construed as necessarily limiting the scope of the claims to the embodiments shown in the corresponding figures.

Although the elements in the following method claims are recited in a particular sequence with corresponding labeling, unless the claim recitations otherwise imply a particular sequence for implementing some or all of those elements, those elements are not necessarily intended to be limited to being implemented in that particular sequence.

Reference herein to "one embodiment," "an embodiment," or "example embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

Unless otherwise specified herein, in addition to its plain meaning, the conjunction "if' may also or alternatively be construed to mean "when" or "upon" or "in response to determining" or "in response to detecting," which construal may depend on the corresponding specific context. For example, the phrase "if it is determined" or "if [a stated condition] is detected" may be construed to mean "upon determining" or "in response to determining" or "upon detecting [the stated condition or event]" or "in response to detecting [the stated condition or event]."

Also, for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements.

The described embodiments are to be considered in all respects as only illustrative and not restrictive. In particular, the scope of the disclosure is indicated by the appended claims rather than by the description and figures herein. All changes that come within the meaning and range of equivalency of the claims are to be embraced within their scope.

The description and drawings merely illustrate the principles of the disclosure. It will thus be appreciated that those of ordinary skill in the art will be able to devise various arrangements that, although not explicitly described or shown herein, embody the principles of the disclosure and are included within its spirit and scope. Furthermore, all examples recited herein are principally intended expressly to be only for pedagogical purposes to aid the reader in understanding the principles of the disclosure and the concepts contributed by the inventor(s) to furthering the art and are to be construed as being without limitation to such specifically recited examples and conditions. Moreover, all statements herein reciting principles, aspects, and embodiments of the disclosure, as well as specific examples thereof, are intended to encompass equivalents thereof.

The functions of the various elements shown in the figures, including any functional blocks labeled as "processors" and/or "controllers," may be provided using dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the technique being selectable by the implementer as more specifically understood from the context.

As used in this application, the term "circuitry" may refer to one or more or all of the following: (a) hardware-only circuit implementations (such as implementations in only analog and/or digital circuitry); (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the claim element, a baseband integrated circuit or processor integrated circuit for a mobile device or a similar integrated circuit in server, a cellular network device, or other computing or network device.

It should be appreciated by those of ordinary skill in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

"SUMMARY OF SOME ILLUSTRATIVE EMBODIMENTS" in this specification is intended to introduce some example embodiments, with additional embodiments being described in "DETAILED DESCRIPTION OF SOME ILLUSTRATIVE EMBODIMENTS" and/or in reference to one or more drawings. "SUMMARY OF SOME ILLUSTRATIVE EMBODIMENTS" is not intended to identify essential elements or features of the claimed subject matter, nor is it intended to limit the scope of the claimed subject matter.

## Claims

1. An apparatus, comprising:
an optical data receiver configured to receive a pulse-modulated optical signal carrying optical pulses including clock pulses, the optical data receiver comprising an electro-optical front end configured to output a time series of measurements of the received pulse-modulated optical signal; and
a digital signal processor configured to identify a sequence of carried optical pulse times from the time series of measurements;
wherein the digital signal processor is further configured to identify times of clock pulses from the identified sequence of carried optical pulse times by temporally filtering the identified sequence of optical pulse times with a plurality of temporal comb filters of different pass band spacings.

2. The apparatus of claim 1, wherein the digital signal processor is further configured to identify potential clock pulse times for each one of the plurality of temporal comb filters by determining which of the optical pulse times in the sequence of carried optical pulse times are in a pass band of each one of the plurality of temporal comb filters.

3. The apparatus of claim 2, wherein the digital signal processor is further configured to identify one temporal comb filter of the plurality of temporal comb filters having more potential clock pulse times than others of the temporal comb filters and estimate a data symbol-clock-pulse frame length of the received pulse-modulated optical signal as corresponding to the pass band spacing of the identified one temporal comb filter.

4. The apparatus of claim 3, wherein the digital signal processor is further configured to refine the potential clock pulse times by identifying and removing outlier potential clock pulse times from the identified one temporal comb filter.

5. The apparatus of claim 4, wherein the digital signal processor is configured to further filter the refined potential clock pulse times with a set of temporal comb filters of different pass band spacing to refine the estimated data symbol-clock-pulse frame length of the received pulse-modulated optical signal.

6. The apparatus of claim 3, wherein the received pulse-modulated optical signal further carries a data sequence and wherein the digital signal processor is configured to use the estimated data symbol-clock-pulse frame length to extract the data sequence from the time series of measurements.

7. The apparatus of any of claims 1-6, wherein the received pulse-modulated optical signal is pulse position modulated to carry data.

8. The apparatus of claim 1, wherein the optical data receiver is further configured for receiving the pulse-modulated optical signal from a remote optical transmitter via a free-space optical link.

9. A method, comprising:
receiving a pulse-modulated optical signal carrying optical pulses including clock pulses at an optical data receiver;
outputting a time series of measurements of the received pulse-modulated optical signal by the optical data receiver;
identifying a sequence of carried optical pulse times from the time series of measurements; and
identifying clock pulse times from the identified sequence of carried optical pulse times by temporally filtering the identified sequence of carried optical pulse times with a plurality of temporal comb filters of different pass band spacings.

10. The method of claim 9, further comprising, identifying potential clock pulse times from the identified sequence of carried optical pulse times for each one of the plurality of temporal comb filters by determining which of the potential clock pulse times in the sequence of carried optical pulse times are in a pass band of each one of the plurality of temporal comb filters.

11. The method of claim 10, further comprising identifying one temporal comb filter of the plurality of temporal comb filters having more potential clock pulse times than others off the temporal comb filters and estimating a data symbol-clock-pulse frame length of the received pulse-modulated optical signal as corresponding to the pass band spacing of the identified one temporal comb filter.

12. The method of claim 11, further comprising refining the potential clock pulse times by identifying and removing outlier potential clock pulse times from the identified one temporal comb filter.

13. The method of claim 12, further comprising further filtering the refined potential clock pulse times with a set of temporal comb filters of different pass band spacing to refine the estimated data symbol-clock-pulse frame length of the received pulse-modulated optical signal.

14. The method of claim 11, wherein the received pulse-modulated optical signal further carries a data sequence and, wherein the method further comprises using the estimated data symbol-clock-pulse frame length to extract the data sequence from the time series of measurements.

15. The method of any of claims 9-14, wherein the received pulse-modulated optical signal is pulse position modulated to carry data.
